# EUROPEAN PATENT APPLICATION

(11) **EP 4 223 798 A1**
(43) Date of publication of application: **09.08.2023**
(21) Application number: 21875534.6
(22) Date of filing: 27.09.2021
(51) Int. Cl.: C08F 14/18, C08L 23/02, C08L 27/18, C08L 29/00, C08L 33/04, C08F 2/30, C08F 2/44

(54) **METHOD FOR PRODUCING FLUORINE-CONTAINING POLYMER, AQUEOUS DISPERSION LIQUID OF FLUORINE-CONTAINING POLYMER, AND POLYMER COMPOSITION**

(30) Priority: 30.09.2020 JP 2020165490
(71) Applicant: AGC INC., Chiyoda-ku, Tokyo 1008405 (JP)
(72) Inventor: SHIBASAKI Kosuke, Tokyo 100-8405 (JP); FUKUNAGA Shintaro, Tokyo 100-8405 (JP); TAGUCHI Daisuke, Tokyo 100-8405 (JP)
(74) Representative: Müller-Boré & Partner Patentanwälte PartG mbB
(86) International application number: PCT/JP2021/035415
(87) International publication number: WO 2022/071232

(57) **Abstract**

To provide a method for producing a fluorinated polymer which does not require an emulsifier as an essential component while an aqueous medium with little environmental burden is used. A method for producing a fluorinated polymer, which comprises polymerizing at least one fluorinated polymer selected from tetrafluoroethylene, chlorotrifluoroethylene and vinylidene fluoride, in an aqueous medium in the presence of a specific polymer having at least one type of units selected from units based on a compound represented by the formula (1) and units based on a compound represented by the formula (2) to produce a fluorinated polymer (provided that when tetrafluoroethylene is polymerized, tetrafluoroethylene is polymerized so that the content of units based on tetrafluoroethylene in the fluorinated polymer becomes less than 99 mass% to all units in the fluorinated polymer):

formula (1): CXY=CR¹ -COO-(L-O)ₙ -R²

formula (2): CXY=CR³-(O)ₘ-CH₂-Z-R⁴

## Description

### TECHNICAL FIELD

The present invention relates to a method for producing a fluorinated polymer, a fluorinated polymer aqueous dispersion, and a polymer composition.

### BACKGROUND ART

Fluorinated polymers such as an ethylene/tetrafluoroethylene copolymer and a tetrafluoroethylene/perfluoroalkyl vinyl ether copolymer, which are excellent in heat resistance, chemical resistance, flame retardancy, weather resistance, etc., are widely used in various industrial fields.

As a method for producing a fluorinated polymer, a method of emulsion-polymerizing a fluorinated monomer in an aqueous medium using a fluorinated emulsifier may be mentioned (Patent Document 1).

### PRIOR ART DOCUMENTS

### PATENT DOCUMENT

Patent Document 1: WO2007/046377

### DISCLOSURE OF INVENTION

### TECHNICAL PROBLEM

Since the method in Patent Document 1 employs an aqueous medium, it imposes less environmental burden, however, if the emulsifier as an essential component remains in a large amount in an aqueous dispersion obtained by polymerization, removal of the emulsifier is necessary depending upon the application.

The object of the present invention is to provide a method for producing a fluorinated polymer which does not require an emulsifier as an essential component even though an aqueous medium with little environmental burden is used.

Another object of the present invention is to provide a fluorinated polymer aqueous dispersion and a polymer composition.

### SOLUTION TO PROBLEM

The present inventors have conducted extensive studies and as a result, found that the above objects can be achieved by the following constitution.

[1] A method for producing a fluorinated polymer, which comprises polymerizing at least one fluorinated monomer selected from tetrafluoroethylene, chlorotrifluoroethylene and vinylidene fluoride, in an aqueous medium in the presence of a specific polymer having at least one type of units selected from units based on a compound represented by the following formula (1) and units based on a compound represented by the following formula (2) to produce a fluorinated polymer (provided that when tetrafluoroethylene is polymerized, tetrafluoroethylene is copolymerized so that the content of units based on tetrafluoroethylene in the fluorinated polymer becomes less than 99 mass% to all units in the fluorinated polymer):

   formula (1): CXY=CR¹ -COO-(L-O)ₙ -R²

   formula (2): CXY=CR³-(O)ₘ-CH₂-Z-R⁴

   the symbols in the formula (1) and the formula (2) are as follows:
   X and Y are each independently a hydrogen atom, a halogen atom or a methyl group;
   R¹ is a hydrogen atom, a halogen atom or a C₁₋₃ alkyl group;
   R² is an alkyl group, an alkyl group having at least one -CH₂- in the alkyl group replaced with -CO-, or a group represented by the following formula (3);
   R³ is a hydrogen atom, a halogen atom, a C₁₋₃ alkyl group or -CO-OCH₃ ;
   R⁴ is an alkyl group;
   L is an alkylene group;
   Z is -CO-O-* or -O-CO-*, provided that * represents the binding position to R⁴;
   m is 0 or 1, and n is an integer of at least 1;

   formula (3): -CO-CR' =CXY

   in the formula (3), X, Y and R¹ are respectively as defined for X, Y and R¹ in the formula (1).
[2] The production method according to [1], wherein the amount of the specific polymer present is from 0.0001 to 1.0 parts by mass per 100 parts by mass of the aqueous medium.
[3] A method for producing a fluorinated polymer, which comprises polymerizing at least one specific compound selected from a compound represented by the following formula (1) and a compound represented by the following formula (2) in an aqueous medium to obtain an aqueous medium in which a specific polymer is present, and then in the aqueous medium in which the specific polymer is present, polymerizing at least one fluorinated monomer selected from tetrafluoroethylene, chlorotrifluoroethylene and vinylidene fluoride to produce a fluorinated polymer (provided that when tetrafluoroethylene is polymerized, tetrafluoroethylene is copolymerized so that the content of units based on tetrafluoroethylene in the fluorinated polymer becomes less than 99 mass% to all units in the fluorinated polymer):

   formula (1): CXY=CR¹ -COO-(L-O)ₙ -R²

   formula (2): CXY=CR³-(O)ₘ-CH₂-Z-R⁴

   the symbols in the formula (1) and the formula (2) are as follows:
   X and Y are each independently a hydrogen atom, a halogen atom or a methyl group;
   R¹ is a hydrogen atom, a halogen atom or a C₁₋₃ alkyl group;
   R² is an alkyl group, an alkyl group having at least one -CH₂- in the alkyl group replaced with -CO-, or a group represented by the following formula (3);
   R³ is a hydrogen atom, a halogen atom, a C₁₋₃ alkyl group or -CO-OCH₃;
   R⁴ is an alkyl group;
   L is an alkylene group;
   Z is -CO-O-* or -O-CO-*, provided that * represents the binding position to R⁴;
   m is 0 or 1, and n is an integer of at least 1;

   formula (3): -CO-CR¹ =CXY

   in the formula (3), X, Y and R¹ are respectively as defined for X, Y and R¹ in the formula (1).
[4] The production method according to [3], wherein the aqueous medium in which the specific polymer is present, is the aqueous medium which is used for producing the specific polymer and in which the specific polymer is thus present.
[5] The production method according to [3] or [4], wherein the amount of the specific polymer present at the time of polymerizing the fluorinated monomer is from 0.0001 to 1.0 parts by mass per 100 parts by mass of the aqueous medium.
[6] A method for producing a fluorinated polymer, which comprises polymerizing at least one fluorinated monomer selected from tetrafluoroethylene, chlorotrifluoroethylene and vinylidene fluoride in an aqueous medium, in the presence of a polyoxyalkylene oxide compound and substantially in the absence of an emulsifier to produce a fluorinated polymer (provided that when tetrafluoroethylene is polymerized, tetrafluoroethylene is copolymerized so that the content of units based on tetrafluoroethylene in the fluorinated polymer becomes less than 99 mass% to all units in the fluorinated polymer).
[7] A fluorinated polymer aqueous dispersion, which comprises an aqueous medium, particles containing a fluorinated polymer having units based on at least one fluorinated monomer selected from tetrafluoroethylene, chlorotrifluoroethylene and vinylidene fluoride (provided that when units based on tetrafluoroethylene are contained in the fluorinated polymer, the content of the units based on tetrafluoroethylene in the fluorinated polymer is less than 99 mass% to all units in the fluorinated polymer) and having a volume based cumulative 50% particle size of from 20 to 3000 nm, and a specific polymer having at least one type of units selected from units based on a compound represented by the following formula (1) and units based on a compound represented by the following formula (2), contained as particles in the aqueous medium or contained in the particles containing the fluorinated polymer, and which contains substantially no emulsifier:

   formula (1): CXY=CR¹ -COO-(L-O)ₙ -R²

   formula (2): CXY=CR³-(O)ₘ-CH₂-Z-R⁴

   the symbols in the formula (1) and the formula (2) are as follows:
   X and Y are each independently a hydrogen atom, a halogen atom or a methyl group;
   R¹ is a hydrogen atom, a halogen atom or a C₁₋₃ alkyl group;
   R² is an alkyl group, an alkyl group having at least one -CH₂- in the alkyl group replaced with -CO-, or a group represented by the following formula (3);
   R³ is a hydrogen atom, a halogen atom, a C₁₋₃ alkyl group or -CO-OCH₃;
   R⁴ is an alkyl group;
   L is an alkylene group;
   Z is -CO-O-* or -O-CO-*, provided that * represents the binding position to R⁴;
   m is 0 or 1, and n is an integer of at least 1;

   formula (3): -CO-CR' =CXY

   in the formula (3), X, Y and R¹ are respectively as defined for X, Y and R¹ in the formula (1).
[8] The fluorinated polymer aqueous dispersion according to [7], which contains the particles containing the fluorinated polymer in an amount of from 1.0 to 50.0 parts by mass per 100 parts by mass of the aqueous medium.
[9] The fluorinated polymer aqueous dispersion according to [7] or [8], which contains the particles of the specific polymer in an amount of from 0.0001 to 1.0 parts by mass per 100 parts by mass of the aqueous medium.
[10] The fluorinated polymer aqueous dispersion according to any one of [7] to [9], which contains the particles of the specific polymer in an amount of from 0.001 to 5.00 parts by mass per 100 parts by mass of the particles containing the fluorinated polymer.
[11] A fluorinated polymer aqueous dispersion, which comprises an aqueous medium, particles containing a fluorinated polymer having units based on at least one fluorinated monomer selected from tetrafluoroethylene, chlorotrifluoroethylene and vinylidene fluoride (provided that when units of tetrafluoroethylene are contained in the fluorinated polymer, the content of the units based on tetrafluoroethylene in the fluorinated polymer is less than 99 mass% to all units in the fluorinated polymer) and having a volume based cumulative 50% particle size of from 20 to 3000 nm, and a polyalkylene oxide compound, and which contains substantially no emulsifier.
[12] A polymer composition, which comprises a fluorinated polymer having units based on at least one fluorinated monomer selected from tetrafluoroethylene, chlorotrifluoroethylene and vinylidene fluoride (provided that when units based on tetrafluoroethylene are contained in the fluorinated polymer, the content of the units based on tetrafluoroethylene in the fluorinated polymer is less than 99 mass% to all units in the fluorinated polymer), and a specific polymer having at least one type of units selected from units based on a compound represented by the following formula (1) and units based on a compound represented by the following formula (2), and which contains substantially no emulsifier:

   formula (1): CXY=CR¹ -COO-(L-O)ₙ -R²

   formula (2): CXY=CR³-(O)ₘ-CH₂-Z-R⁴

   the symbols in the formula (1) and the formula (2) are as follows:
   X and Y are each independently a hydrogen atom, a halogen atom or a methyl group;
   R¹ is a hydrogen atom, a halogen atom or a C₁₋₃ alkyl group;
   R² is an alkyl group, an alkyl group having at least one -CH₂- in the alkyl group replaced with -CO-, or a group represented by the following formula (3);
   R³ is a hydrogen atom, a halogen atom, a C₁₋₃ alkyl group or -CO-OCH₃ ;
   R⁴ is an alkyl group;
   L is an alkylene group;
   Z is -CO-O-* or -O-CO-*, provided that * represents the binding position to R⁴;
   m is 0 or 1, and n is an integer of at least 1;

   formula (3): -CO-CR' =CXY

   in the formula (3), X, Y and R¹ are respectively as defined for X, Y and R¹ in the formula (1).
[13] The polymer composition according to [12], wherein the content of the specific polymer is from 0.001 to 5.00 parts by mass per 100 parts by mass of the fluorinated polymer.
[14] A polymer composition, which comprises a fluorinated polymer having units based on at least one fluorinated monomer selected from tetrafluoroethylene, chlorotrifluoroethylene and vinylidene fluoride (provided that when units based on tetrafluoroethylene are contained in the fluorinated polymer, the content of the units based on tetrafluoroethylene in the fluorinated polymer is less than 99 mass% to all units in the fluorinated polymer), and a polyoxyalkylene oxide compound, and which contains substantially no emulsifier.

### ADVANTAGEOUS EFFECTS OF INVENTION

According to the present invention, it is possible to provide a method for producing a fluorinated polymer which does not require an emulsifier as an essential component even though an aqueous medium with little environmental burden is used.

According to the present invention, it is also possible to provide a fluorinated polymer aqueous dispersion and a polymer composition.

### DESCRIPTION OF EMBODIMENTS

Meanings of terms in this specification are as follows.

The content (mass%) of each type of units to all units in a polymer is obtained by analyzing the polymer by solid nuclear magnetic resonance (NMR) method, or may be estimated from the amount of each monomer charged. Usually, the content of each type of units calculated from the amount of the monomer charged substantially agrees with the actual content of the units.

A "volume based cumulative 50% particle size" means a particle size at a point where the cumulative volume is 50% on a cumulative curve obtained by measuring the particle size distribution by laser diffraction/scattering method and taking the total volume of the group of the particles being 100%. Hereinafter sometimes referred to as "D50".

### <First Embodiment>

The method for producing a fluorinated polymer according to a first embodiment of the present invention is a method which comprises polymerizing at least one fluorinated monomer selected from tetrafluoroethylene, chlorotrifluoroethylene and vinylidene fluoride (hereinafter sometimes referred to as "specific fluorinated monomer"), in an aqueous medium in the presence of a specific polymer having at least one type of units selected from units based on a compound represented by the following formula (1) (hereinafter sometimes referred to as "compound (1)") and units based on a compound represented by the following formula (2) (hereinafter sometimes referred to as "compound (2)"). When tetrafluoroethylene is polymerized, tetrafluoroethylene is copolymerized so that the content of units based on tetrafluoroethylene in the fluorinated polymer becomes less than 99 mass% to all units in the fluorinated polymer.

In the method for producing a fluorinated polymer according to the first embodiment of the present invention, a specific polymer obtained by separate polymerization may be used, or a specific polymer may be obtained by polymerization in an aqueous medium, and sequentially in the same polymerization system, a specific fluorinated monomer is polymerized. Polymerization sequentially in the same polymerization system means that the aqueous medium which is used for producing the specific polymer and in which the specific polymer is thus present, is used, and the specific fluorinated monomer is polymerized in the aqueous medium in which the specific polymer is present. As the specific polymer obtained by separate polymerization, commercial products may be used.

The method for producing a fluorinated polymer according to the first embodiment of the present invention is preferably a method of polymerizing at least one specific compound selected from the compound (1) and the compound (2) in an aqueous medium to obtain an aqueous medium in which the specific polymer is present, and polymerizing the specific fluorinated monomer in the aqueous medium in which the specific polymer is present to produce a fluorinated polymer. In such a two-step production method, the first step of obtaining the aqueous medium in which the specific polymer is present will be hereinafter referred to as "step 1", and the latter step of producing the fluorinated polymer will be hereinafter referred to as "step 2".

Polymerization of the compound (1) in step 1 and polymerization of the specific fluorinated monomer in step 2 are each preferably conducted in the presence of a polymerization initiator.

The polymerization initiator is preferably a water-soluble polymerization initiator.

### <Step 1>

### (Specific compound)

In step 1, at least one specific compound selected from the compound (1) and the compound (2) is used. The specific compound may be used in combination of two or more.

formula (1): CXY=CR¹ -COO-(L-O)ₙ -R²

formula (2): CXY=CR³-(O)ₘ-CH₂-Z-R⁴

The symbols in the formula (1) and the formula (2) are as follows.
X and Y are each independently a hydrogen atom, a halogen atom or a methyl group;
R¹ is a hydrogen atom, a halogen atom or a C₁₋₃ alkyl group;
R² is an alkyl group, an alkyl group having at least one -CH₂- in the alkyl group replaced with -CO- (hereinafter sometimes referred to as "substituted alkyl group"), or a group represented by the following formula (3);
R³ is a hydrogen atom, a halogen atom, a C₁₋₃ alkyl group or -CO-OCH₃ ;
R⁴ is an alkyl group;
L is an alkylene group;
Z is -CO-O-* or -O-CO-*, provided that * represents the binding position to R⁴;
m is 0 or 1, and n is an integer of at least 1;

formula (3): -CO-CR' =CXY

In the formula (3), X, Y and R¹ are respectively as defined for X, Y and R¹ in the formula (1).

The groups in the formula (1) are preferably as follows, whereby the specific polymer will readily be obtained.

X and Y are each independently preferably a hydrogen atom, a fluorine atom or a chlorine atom, and it is more preferred that both are hydrogen atoms.

R¹ is preferably a C₁₋₃ alkyl group, particularly preferably a methyl group.

L is preferably a C₂₋₆ alkylene group, more preferably a C₂₋₃ alkylene group, further preferably an ethylene group. The alkylene group as L may be linear or branched.

The alkyl group as R² is preferably a C₁₋₃ alkyl group, more preferably a methyl group.

The number of groups represented by -CO- in the substituted alkyl group as R² is preferably from 1 to 3, more preferably 2. The position of -CO- in the substituted alkyl group may be at the terminal of the substituted alkyl group, or may be between -CH₂- and -CH₂-. The substituted alkyl group as R² is preferably -CO-CH₂-CO-CH₃ .

X, Y and R¹ in the group represented by the formula (3) as R² are as defined for X, Y and R¹ in the formula (1), and the preferred embodiments are also the same.

n is preferably from 1 to 100, more preferably from 1 to 50.

The compound (1) is preferably a compound represented by the formula (1A), a compound represented by the formula (1B) or a compound represented by the formula (1C).

Formula (1A): CXY=CR¹ -COO-(L-O)ₙ -R^{2 a}

Formula (1B): CXY=CR¹ -COO-(L-O)ₙ -CO-CR¹ =CXY

Formula (1C): CXY=CR¹ -COO-L-O-R^{2 b}

In the formula (1A), the formula (1B) and the formula (1C), X, Y, R¹, Land n are as defined for X, Y, R¹ , L and n in the formula (1).

In the formula (1A), R^{2 a} is an alkyl group.

In the formula (1C), R^{2 b} is a substituted alkyl group.

The respective groups in the formula (2) are preferably as follows, whereby the specific polymer will readily be obtained.

In the formula (2), preferred ranges of X and Y are the same as the preferred ranges of X and Y in the formula (1).

R³ is preferably a C₁₋₃ alkyl group or -CO-OCH₃.

Z is preferably -O-CO-*.

R⁴ is preferably a C₁₋₃ alkyl group, more preferably a methyl group.

m is preferably 0.

The compound (2) is preferably a compound represented by the formula (2A).

Formula (2A) CXY=CR^{3 a} -CH₂-O-CO-R⁴

In the formula (2A), X, Y and R⁴ are as defined for X, Y and R⁴ in the formula (2).

R^{3a} is a C₁₋₃ alkyl group.

### (Aqueous medium)

The aqueous medium may, for example, be water or a mixture of water and a water-soluble organic solvent.

The water-soluble organic solvent may, for example, be tert-butanol, propylene glycol or dipropylene glycol. In the mixture of water and the water-soluble organic solvent, the concentration of the water-soluble organic solvent is preferably at most 10 mass%. The aqueous medium is preferably water alone.

### (Water-soluble polymerization initiator)

The water-soluble polymerization initiator is preferably a water-soluble radical initiator or a water-soluble redox catalyst.

The water-soluble radical initiator is preferably a persulfate such as ammonium persulfate or potassium persulfate, or a water-soluble organic peroxide such as disuccinic peroxide, bisglutaric peroxide or tert-butyl hydroperoxide.

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, bisulfite salt, thiosulfuric acid or its salt, an organic acid or an inorganic salt. The persulfate is preferably potassium persulfate or ammonium persulfate. The sulfite is preferably sodium sulfite. The inorganic salt may be a combination of sulfate anion, sulfite anion or chloride anion, and a metal ion. The metal ion is preferably a transition metal ion, such as manganese, iron, cobalt, nickel, copper, zinc, cerium or silver ion, and is preferably iron ion. The inorganic salt is preferably iron(II) sulfate.

The water-soluble polymerization initiator is preferably the water-soluble redox catalyst, more preferably a combination of potassium persulfate and sodium sulfite or a combination of potassium persulfate, sodium sulfite and an inorganic salt, further preferably a combination of potassium persulfate and sodium sulfite or a combination of potassium persulfate, sodium sulfite and iron(II) sulfate.

In order to facilitate progress of polymerization of the specific compound, the pH in the reaction system is preferably from 3 to 10, more preferably from 6 to 8. For adjustment, a sulfite such as sodium sulfite, ammonia, sodium hydroxide, hydrochloric acid or the like may be added as the case requires.

As the water-soluble polymerization initiator, two or more types may be used in combination.

As a method of charging the water-soluble polymerization initiator, the entire amount may be charged to the reaction system before the polymerization reaction is initiated, or the initiator may be added to the reaction system continuously or intermittently.

The amount of the specific compound used is, per 100 parts by mass of the aqueous medium, preferably from 0.0001 to 1.0 parts by mass, more preferably from 0.001 to 0.5 parts by mass. Within such a range, a decrease in the polymerization rate is prevented, and when the fluorinated polymer is produced in step 2, the amount of the specific polymer present with the fluorinated polymer can be reduced. As the method of charging the specific compound, preferred is initial batch addition of adding the entire amount to the reaction system before the polymerization reaction is initiated.

The amount of the water-soluble polymerization initiator used is, per 1 mol of the specific compound, preferably from 0.1 to 50.0 mol, more preferably from 0.1 to 40.0 mol, further preferably from 0.5 to 10.0 mol.

The polymerization temperature of the specific compound is preferably from 10 to 95°C, more preferably from 50 to 90°C. The polymerization time is, in the case of batch treatment, preferably from 5 to 400 minutes, more preferably from 5 to 300 minutes.

As the pressure condition at the time of polymerization, reduced pressure condition or normal pressure condition is preferred.

By the polymerization, an aqueous dispersion containing the specific polymer is obtained. The specific polymer is in the form or particles, which are uniformly dispersed in the aqueous medium. The aqueous dispersion is colloidal.

It is estimated that particles of the specific polymer (hereinafter sometimes referred to as "specific particles") adsorb and incorporate the specific fluorinated monomer at hydrophobic moiety at the time of polymerization of the specific fluorinated monomer described later, to solubilize the specific fluorinated monomer, and by adding the initiator, the specific fluorinated monomer is polymerized in the particles of the specific particles. Further, it is estimated that the specific particles contribute to stabilization of dispersion in the aqueous medium and in the organic solvent.

D50 of the specific particles is preferably from 10 to 1,000 nm, more preferably from 10 to 300 nm, further preferably from 10 to 200 nm, particularly preferably from 10 to 150 nm.

The specific particles are constituted by the specific polymer having units based on the specific compound (units based on the compound (1) and units based on the compound (2)).

The content of the units based on the specific compound in the specific polymer is, to all units in the specific polymer, preferably at least 50 mass%, more preferably at least 70 mass%, further preferably at least 90 mass%. The upper limit is 100 mass%.

By the above polymerization, a fluorinated polymer aqueous dispersion containing the specific particles having D50 of from 10 to 1,000 nm in an amount of from 0.0001 to 1.0 parts by mass per 100 parts by mass of the aqueous medium will readily be obtained. Per 100 parts by mass of the aqueous medium, the specific particles are contained preferably in an amount of from 0.0001 to 0.5 parts by mass, more preferably from 0.0005 to 0.1 parts by mass.

### <Step 2>

Step 2 is to produce the fluorinated polymer by polymerizing at least one fluorinated monomer selected from tetrafluoroethylene, chlorotrifluoroethylene and vinylidene fluoride (that is, the specific fluorinated monomer) in the aqueous medium in which the specific polymer is present, obtained in step 1.

Polymerization of the specific fluorinated monomer is conducted preferably by using the water-soluble polymerization initiator, and as the water-soluble polymerization initiator, the water-soluble polymerization initiators described in step 1 may be mentioned. It is also preferred to further use a chain transfer agent for polymerization of the specific fluorinated monomer.

The fluorinated polymer may be a tetrafluoroethylene polymer having units based on tetrafluoroethylene (TFE) (hereinafter sometimes referred to as "TFE units"), polyvinylidene fluoride (hereinafter sometimes referred to as "PVdF"), polychlorotrifluoroethylene or a copolymer of ethylene and chlorotrifluoroethylene. Among them, a tetrafluoroethylene polymer is preferred.

The fluorinated polymer may have unites based on a monomer other than the specific fluorinated monomer.

As other monomer, a fluorinated monomer such as hexafluoropropylene (hereinafter sometimes referred to as "HFP"), a perfluoro(alkyl vinyl ether) (hereinafter sometimes referred to as "PAVE") and a fluoroalkylethylene (hereinafter sometimes referred to as "FAE") may be mentioned.

As PAVE, CF₂=CFOCF₃ (hereinafter sometimes referred to as "PMVE"), CF₂=CFOCF₂CF₃, CF₂=CFOCF₂CF₂CF₃ (hereinafter sometimes referred to as "PPVE"), CF₂=CFOCF₂CF₂CF₂CF₃, and CF₂=CFO(CF₂)₈F may be mentioned, and PMVE and PPVE are preferred.

As FAE, CH₂=CH(CF₂)₂F (hereinafter sometimes referred to as "PFEE"), CH₂=CH(CF₂)₃F, CH₂=CH(CF₂)₄F (hereinafter sometimes referred to as "PFBE"), CH₂=CF(CF₂)₃H, and CH₂=CF(CF₂)₄H may be mentioned, and PFEE and PFBE are preferred.

Further, as other monomer, ethylene, propylene, vinyl chloride, vinylidene chloride and vinyl fluoride may also be mentioned.

Further, as other monomer, a monomer having an oxygen-containing polar group may also be mentioned. The oxygen-containing polar group is preferably an acid anhydride residue, a hydroxy group, a carbonyl group-containing group, an acetal group or an oxycycloalkane group, more preferably an acid anhydride residue. The monomer having an acid anhydride residue is preferably a monomer having a cyclic acid anhydride residue, preferably itaconic anhydride (hereinafter sometimes referred to as "IAH"), citraconic anhydride, 5-norbornene-2,3-dicarboxylic anhydride (another name: himic anhydride, hereinafter sometimes referred as "NAH") or maleic anhydride.

The tetrafluoroethylene polymer may be a copolymer of TFE and PAVE, a copolymer of TFE and HFP (hereinafter sometimes referred to as "FEP"), a copolymer of TFE and ethylene (hereinafter sometimes referred to as "ETFE"), a copolymer of TFE and propylene, and a copolymer of TFE and vinylidene fluoride.

Here, when TFE is polymerized, TFE is copolymerized so that the content of TFE units in the fluorinated polymer is less than 99 mass% to all units in the fluorinated polymer. Further, in a case where no units based on at least one fluorinated monomer selected from chlorotrifluoroethylene and vinylidene fluoride are contained and TFE units are contained, the content of the TFE units is preferably at least 10 mass% and less than 99 mass% to all units in the fluorinated polymer.

Further, the tetrafluoroethylene polymer does not include the following specific high heat resistant polymer.

Specific high heat resistant polymer: a polymer having a first endothermic peak by temperature increase at 10°C/min at 330°C or higher, and an endothermic peak after the first endothermic peak at 320°C or higher, as measured by a differential scanning calorimetry.

The tetrafluoroethylene polymer in the present invention is preferably ETFE, a copolymer of TFE and PAVE, or FEP, more preferably ETFE or the after-described PFA.

FEP is preferably FEP having a proportion of the HFP units to the total amount of the TFE units and the HFP units of from 1 to 15 mol%, more preferably from 5 to 13 mol%.

ETFE has TFE units and units based on ethylene (hereinafter sometimes referred to as "E units"). In the copolymer having TFE units and E units, the proportion of the E units to the total amount of the E units and the TFE units is preferably from 20 to 70 mol%, more preferably from 25 to 60 mol%, further preferably from 35 to 55 mol%.

To all units constituting ETFE, the total proportion of the E units and the TFE units is preferably at least 80 mol%, more preferably at least 85 mol%, further preferably at least 90 mol%.

Further, ETFE preferably has FAE units in addition to the E units and the TFE units. The proportion of the FAE units to the total amount of the E units and the TFE units is preferably from 0.1 to 10 mol%, more preferably from 0.1 to 5 mol%, further preferably from 0.2 to 4 mol%.

Further, ETFE preferably has units based on a monomer having an oxygen-containing polar group in addition to the E units and the TFE units. The proportion of the units based on a monomer having an oxygen-containing polar group to the total amount of the E units and the TFE units is preferably from 0.01 to 5 mol%, more preferably from 0.05 to 3 mol%. The method for producing a fluorinated polymer of the present invention employs emulsion polymerization using an aqueous medium, by which even when a monomer having an oxygen-containing polar group, such as a monomer having a highly hydrophilic cyclic acid anhydride residue is used, it is not dissolved too much, copolymerization with e.g. tetrafluoroethylene is easy, and the oxygen-containing polar group can readily be introduced to the fluorinated polymer.

The copolymer of TFE and PAVE has TFE units and PAVE units. As the copolymer of TFE and PAVE, preferred is a copolymer having a proportion of the PAVE units to the total amount of the TFE units and the PAVE units of at least 0.1 mol% and less than 20 mol% (hereinafter sometimes referred to as "PF1") or a copolymer having a proportion of the PAVE units of from 20 to 70 mol% (hereinafter sometimes referred to as "PF2").

In PF1, the proportion of the PAVE units to the total amount of the TFE units and the PAVE units is preferably from 0.5 to 10 mol%, more preferably from 0.5 to 5.0 mol%.

PF1 may be a copolymer consisting solely of the TFE units and the PAVE units, or may contain at least one type of units based on other monomer.

As other monomer, preferred is other fluorinated monomer or a monomer having an oxygen-containing polar group. As other fluorinated monomer, hexafluoropropylene is preferred. As the monomer having an oxygen-containing polar group, NAH is preferred.

When units based on other monomer are contained, the proportion of the units based on other monomer is, to the total amount of the TFE units and the PAVE units, preferably from 0.1 to 10 mol%, more preferably from 0.1 to 6 mol%. The proportion of the units based on the monomer having an oxygen-containing polar group is preferably from 0.01 to 5 mol%, more preferably from 0.05 to 3 mol%.

The total proportion of the TFE units and the PAVE units to all units constituting PF1 is preferably at least 80 mol%, more preferably at least 85 mol%, further preferably at least 90 mol%.

PF1 will sometimes be referred to as "PFA".

In PF2, the proportion of the PAVE units to the total amount of the TFE units and the PAVE units is preferably from 20 to 50 mol%, more preferably from 25 to 45 mol%.

Further, it is also preferred that in addition to the TFE units and the PAVE units, units based on a monomer having a fluorine atom and a nitrile group (hereinafter sometimes referred to as "CN units") or units based on a monomer having a fluorine atom and a plurality of vinyl groups (hereinafter sometimes referred to as "DV units") are contained.

As the monomer having a fluorine atom and a nitrile group, CF₂=CFO(CF₂)₅CN, and CF₂=CFOCF₂CF(CF₃)CF₂CF₂CN may be mentioned.

As the monomer having a fluorine atom and a plurality of vinyl groups, CF₂=CFO(CF₂)₃OCF=CF₂, CF₂=CFO(CF₂)₄OCF=CF₂, and CH₂=CH(CF₂)₆CH=CH₂ may be mentioned.

The proportion of the CN units to the total amount of the TFE units and the PAVE units is preferably from 0.1 to 10.0 mol%, more preferably from 0.5 to 5.0 mol%.

The proportion of the DV units to the total amount of the TFE units and the PAVE units is preferably from 0.01 to 1.0 mol%, more preferably from 0.01 to 0.5 mol%.

The total proportion of the TFE units and the PAVE units to all units constituting PF2 is preferably at least 80 mol%, more preferably at least 85 mol%, further preferably at least 90 mol%.

The specific fluorinated monomer and other monomer are charged to the reaction system (that is a polymerization vessel) by a conventional method. For example, TFE is charged to the reaction system continuously or intermittently so that the polymerization pressure will be predetermined pressure. Further, for example, other monomer is dissolved in an aqueous medium and the obtained solution is charged to the reaction system continuously or intermittently.

In a case where the water-soluble polymerization initiator is used, the water-soluble polymerization initiator may be added to the reaction system all at once or may be added dividedly.

In a case where a chain transfer agent is used, as the chain transfer agent, an alcohol, a hydrocarbon or a hydrofluorocarbon, which has an effect to stabilize the terminal structure of a resin, is preferred, and an alcohol or a hydrocarbon is more preferred. As the alcohol, methanol or ethanol is preferred, which is easily dissolved in water and which is easily separated from the obtained copolymer after production. As the hydrocarbon, n-pentane, cyclohexane, methane or propane is preferred, which has high thermal stability when introduced to the terminal structure of a resin, and which also has high chain transfer property.

The polymerization temperature is preferably from 10 to 95°C, more preferably from 15 to 90°C. The polymerization pressure is preferably from 0.5 to 4.0 MPaG, more preferably from 0.6 to 3.5 MPaG. The polymerization time is, in the case of batch treatment, preferably from 90 to 1,000 minutes, more preferably from 90 to 700 minutes.

Polymerization of the specific fluorinated monomer may be carried out substantially in the absence of an emulsifier.

As the emulsifier, a known emulsifier may be mentioned, and a common surfactant may be mentioned.

The emulsifier does not include the specific polymer in the present invention, the after-described polyoxyalkylene oxide compound, and a decomposed product obtained by mixing the polyoxyalkylene oxide compound and an oxidizing agent.

"Substantially in the absence of an emulsifier" means an environment in which the content of the emulsifier to the total mass of the aqueous medium is at most 0.03 mass ppm, preferably at most 0.02 mass ppm, more preferably 0 mass ppm.

The production of the specific polymer and the production of the fluorinated polymer may be conducted continuously in a single polymerization vessel.

Further, in the production method of the present invention, so long as the specific particles are formed in the production of the specific polymer, production of the fluorinated polymer may be conducted before the specific compound is completely consumed in the production of the specific polymer. In such a case, it is considered that a fluorinated polymer having units based on the specific compound may sometimes form.

In a case where the production of the specific polymer and the production of the fluorinated polymer are continuously carried out, the content of the specific polymer which is obtained in step 1 and is present in step 2, in the aqueous medium, is, per 100 parts by mass of the aqueous medium, preferably from 0.0001 to 1.0 parts by mass, more preferably from 0.0005 to 0.5 parts by mass.

In a case where the production of the specific polymer and the production of the fluorinated polymer are not carried out continuously, step 1 may be omitted. Instead of step 1, a commercially available specific polymer is prepared, and the content of the specific polymer present in step 2 in the aqueous medium is adjusted to be preferably from 0.0001 to 1.0 parts by mass, more preferably from 0.001 to 0.5 parts by mass, per 100 parts by mass of the aqueous medium.

Of the commercially available specific polymer also, D50 of the particles is preferably from 10 to 1,000 nm, more preferably from 10 to 300 nm, further preferably from 10 to 200 nm, particularly preferably from 10 to 150 nm.

Further, the content of the units based on the specific compound in the commercially available specific polymer is, to all units in the polymer, preferably at least 50 mass%, more preferably at least 70 mass%, further preferably at least 90 mass%. The upper limit is 100 mass%.

By the above procedure, a fluorinated polymer aqueous dispersion comprising particles containing a fluorinated polymer having units based on the specific fluorinated monomer and having D50 of from 20 to 3,000 nm, and the specific particles, is easily obtained.

Further, as mentioned above, as it is estimated that the specific fluorinated monomer is polymerized in the specific particles at the time of polymerization of the monomer, the formed fluorinated polymer particles incorporate the specific particles therein, whereby particles containing the fluorinated polymer and the specific polymer may sometimes form. Particularly in a case where the specific particles have high affinity with the specific fluorinated monomer (for example, in a case where the specific particles are particles of the specific polymer having fluorine atoms), it is considered that particles containing the fluorinated polymer and the specific polymer and having D50 of from 20 to 3,000 nm readily form.

The fluorinated polymer aqueous dispersion of the present invention is preferably an aqueous dispersion containing an aqueous medium, particles containing the fluorinated polymer and having D50 of from 20 to 3,000 nm, and the specific polymer contained as particles in the aqueous medium or contained in the particles containing the fluorinated polymer, as described above.

Hereinafter, particles containing the fluorinated polymer mean particles which may contain the specific polymer unless otherwise specified.

The fluorinated polymer aqueous dispersion contains the particles containing the fluorinated polymer preferably in an amount per 100 parts by mass of the aqueous medium of from 1.0 to 50.0 parts by mass, more preferably from 2.0 to 40.0 parts by mass.

The fluorinated polymer aqueous dispersion contains the specific polymer preferably in an amount per 100 parts by mass of the aqueous medium of from 0.0001 to 1.0 parts by mass.

Further, in the fluorinated polymer aqueous dispersion, the content of the specific polymer per 100 parts by mass of the particles containing the fluorinated polymer is preferably from 0.001 to 5.00 parts by mass, more preferably from 0.005 to 3.00 parts by mass.

D50 of the particles containing the fluorinated polymer is preferably from 20 to 1,000 nm.

The fluorinated polymer aqueous dispersion contains substantially no emulsifier.

The emulsifier is as defined above.

"The fluorinated polymer aqueous dispersion contains substantially no emulsifier" means that the content of the emulsifier to the total mass of the aqueous medium is at most 0.03 mass ppm, preferably at most 0.02 mass ppm, more preferably 0 mass%.

Further, in a case where the fluorinated polymer contained in the fluorinated polymer aqueous dispersion has TFE units, the content of the TFE units in the fluorinated polymer to all units in the fluorinated polymer is at most 99 mass%.

The fluorinated polymer aqueous dispersion does not require an emulsifier as an essential component, as described above, and accordingly it is readily converted to a dispersion in an organic solvent such as N-methylpyrrolidone or acetone by solvent replacement.

The fluorinated polymer aqueous dispersion containing the particles containing the fluorinated polymer is mixed with an organic solvent, followed by dehydration by evaporation, by means of anhydrous sodium sulfate, or the like to obtain a dispersion in an organic solvent.

In the fluorinated polymer aqueous dispersion, the fluorinated polymer is stably dispersed even without using an emulsifier. Accordingly, the aqueous dispersion can suitably be used for coating applications, a binder, etc.

The polymer composition of the present invention is preferably a composition containing the specific polymer and a fluorinated polymer having units based on the specific fluorinated monomer.

The polymer composition is readily obtained from the fluorinated polymer aqueous dispersion obtained in step 2. That is, by agglomerating the polymer from the fluorinated polymer aqueous dispersion, a powder of the polymer composition can be obtained. The powdery polymer composition obtained by agglomeration is homogenized e.g. by melt kneading to obtain a material in the form of pellets, particles, etc., containing the fluorinated polymer and the specific polymer, or, from the powdery polymer composition obtained by agglomeration, a formed product may be obtained by melt-forming.

As the agglomeration method, freeze agglomeration, acid agglomeration, base agglomeration and agglomeration using a coagulant may be mentioned, but the method is not limited thereto.

In the case of freeze agglomeration, the agglomeration temperature is preferably from 0 to 5°C. The agglomeration time is preferably at least 1 hour, more preferably at least 2 hours.

In the case of acid agglomeration, preferred is a method of adding a solution containing an acid to the fluorinated polymer aqueous dispersion. The acid to be added may, for example, be hydrochloric acid, nitric acid, sulfuric acid, oxalic acid or hydrofluoric acid, and is preferably hydrochloric acid. The concentration of the acid in the solution containing the acid is preferably from 0.1 to 50 mass%, more preferably from 1 to 30 mass%, further preferably from 1 to 10 mass%.

As base agglomeration, preferred is a method of adding a solution containing a base to the fluorinated polymer aqueous dispersion. The base to be added may, for example, be sodium hydroxide, potassium hydroxide or ammonium carbonate, and is preferably sodium hydroxide. The concentration of the base in the solution containing the base is preferably from 0.1 to 50 mass%, more preferably from 1 to 30 mass%, further preferably from 1 to 10 mass%.

For agglomeration by a coagulant, a known coagulant may be used. The known coagulant may be an aluminum salt, a calcium salt or a magnesium salt. Specifically, aluminum sulfate, alum represented by the formula M'Al(SO₄)₂·₁₂H₂O (wherein M' is a monovalent cation other than lithium), calcium nitrate or magnesium sulfate, and is preferably alum, more preferably potassium alum wherein M is potassium.

As the agglomeration method, base agglomeration is preferred, whereby agglomeration is very likely to proceed.

The melting point of the fluorinated polymer in the polymer composition is preferably at least 150°C, more preferably from 150 to 330°C, further preferably from 180 to 320°C, particularly preferably from 220 to 310°C, most preferably from 260 to 300°C. When the melting point is within such a range, the fluorinated polymer has high heat resistance.

The polymer composition preferably contains substantially no emulsifier.

The emulsifier is as defined above.

"The polymer composition contains substantially no emulsifier" means that the content of the emulsifier to the total mass of the specific polymer and the fluorinated polymer having units based on the specific fluorinated monomer in the polymer composition is at most 0.03 mass ppm, preferably at most 0.02 mass ppm, more preferably 0 mass%.

### <Second embodiment>

The method for producing a fluorinated polymer according to a second embodiment of the present invention is a method of polymerizing the specific fluorinated monomer in an aqueous medium in the presence of a polyalkylene oxide compound substantially in the absence of an emulsifier. When TFE is polymerized, TFE is copolymerized so that the content of TFE units in the fluorinated polymer becomes less than 99 mass% to all units in the fluorinated polymer.

In the above described method for producing a fluorinated polymer according to the first embodiment, polymerization of the specific fluorinated monomer is carried out in the presence of the specific polymer, whereas in the method for producing a fluorinated polymer according to the second embodiment, polymerization of the specific fluorinated monomer is carried out in the presence of a polyalkylene oxide compound substantially in the absence of an emulsifier. That is, in the method for producing a fluorinated polymer according to the first embodiment, the specific polymer is used, whereas in the method for producing a fluorinated polymer according to the second embodiment, a polyalkylene oxide compound is used. The procedure of polymerization of the specific fluorinated monomer in the method for producing a fluorinated polymer according to the second embodiment is the same as the procedure of polymerization of the specific fluorinated polymer in the method for producing a fluorinated polymer according to the first embodiment (specifically the procedure of step 2). Thus, in the following, points in the second embodiment, different from those in the first embodiment, will be mainly described.

### (Polyalkylene oxide compound)

The polyalkylene oxide compound is a compound to form a nucleus (seed) for polymerization of the specific fluorinated monomer. In other words, it corresponds to a nucleus-forming additive.

The polyalkylene oxide compound is a compound containing a polyoxyalkylene chain, and the polyoxyalkylene chain may, for example, be a polyoxyethylene chain, a polyoxypropylene chain or a polyoxytetramethylene chain.

The polyalkylene oxide compound preferably has a surface tension in water of higher than 40 dyn/cm at a concentration of 1000 ppm. The surface tension is more preferably higher than about 42 dyn/cm, more preferably higher than about 45 dyn/cm. The surface tension is preferably at most about 73 dyn/cm.

The number average molecular weight of the polyalkylene oxide compound is preferably from 50 to 2000, more preferably from 100 to 1500, further preferably from 150 to 1300.

The polyalkylene oxide compound is preferably a compound represented by the formula (4).

Formula (4): R^{a} -(O-R^{c})ₚ -O-R^{b}

In the formula (4), R^{a} and R^{b} are each independently a hydrogen atom, an alkyl group, an acryloyl group or a methacryloyl group.

R^{c} is a C₂₋₄ alkylene group, and may be either linear or branched.

p is an integer of from 1 to 50.

The polyalkylene oxide compound may be polyethylene glycol, polyethylene glycol monoacrylate, polyethylene glycol monomethacrylate, polyethylene glycol monomethyl ether, polyethylene glycol dimethyl ether, polyethylene glycol monobutyl ether, polypropylene glycol, polypropylene glycol monoacrylate, polypropylene glycol monomethacrylate, polypropylene glycol dimethacrylate, polypropylene glycol monomethyl ether, polypropylene glycol dimethyl ether, polypropylene glycol monobutyl ether, or polytetramethylene glycol.

The polyalkylene oxide compound may be used alone or in a combination of two or more.

The amount of the polyalkylene oxide compound used is preferably from 0.1 to 10 mass ppm, more preferably from 1 to 10 mass ppm, to the total mass of the aqueous medium.

### (Emulsifier)

In the second embodiment, polymerization of the specific fluorinated monomer is carried out substantially in the absence of the emulsifier.

The emulsifier is as defined above.

"Substantially in the absence of the emulsifier" means an environment in which the content of the emulsifier to the total mass of the aqueous medium is at most 0.03 mass ppm, preferably at most 0.02 mass ppm, more preferably 0 mass%.

In the second embodiment, it is preferred that the polyalkylene oxide compound and an oxidizing agent are mixed in an aqueous medium to obtain a dispersion, and in the obtained dispersion, the specific fluorinated monomer is polymerized to obtain the fluorinated polymer.

### (Oxidizing agent)

The oxidizing agent may, for example, be hydrogen peroxide or a polymerization initiator.

As the polymerization initiator, compounds which are exemplified for the water-soluble polymerization initiator in the above step 1 may be mentioned. As the polymerization initiator, a persulfate is preferred, and ammonium persulfate and potassium persulfate are more preferred.

By mixing the polyalkylene oxide compound and the oxidizing agent in an aqueous medium, a dispersion having a lipophilic nucleus-formed moiety dispersed in the aqueous medium is obtained. More specifically, by mixing the polyalkylene oxide compound and the oxidizing agent, the hydrophilic moiety of the polyalkylene oxide compound is decomposed, and the hydrophobic moiety of the polyoxyalkylene oxide compound becomes a lipophilic nucleus-formed moiety. The lipophilic nucleus-formed moiety is dispersed in the aqueous medium, and the fluorinated polymer can finely be dispersed in such a moiety.

The lipophilic nucleus-formed moiety is excellent in affinity to the specific fluorinated monomer and thus in the dispersion containing the lipophilic nucleus-formed moiety, polymerization of the specific fluorinated monomer is likely to proceed. That is, the lipophilic nucleus-formed moiety can provide a hydrophobic environment for polymerization of the specific fluorinated monomer.

The amount of the oxidizing agent used is preferably from 0.01 to 1.00 mass%, more preferably from 0.05 to 0.5 mass% to the total mass of the aqueous medium.

The temperature when the polyalkylene oxide compound and the oxidizing agent are mixed is preferably from 20 to 120°C, more preferably from 40 to 120°C.

The mixing time when the polyalkylene oxide compound and the oxidizing agent are mixed is preferably from 0.05 to 1.00 hour.

Before the polyalkylene oxide compound and the oxidizing agent are mixed, or during mixing, it is preferred to add a water-soluble inorganic salt to the aqueous medium.

The amount of the water-soluble inorganic salt used is preferably from 1 to 1000 mass ppm, more preferably from 10 to 1000 mass ppm to the total mass of the aqueous medium.

The water-soluble inorganic salt may, for example, be sodium sulfite, sodium bisulfite, sodium chloride, potassium sulfite, potassium bisulfite, potassium carbonate, ammonium oxalate, sodium tetraborate, sodium acetate, ammonium carbonate, ammonium dihydrogen phosphate or diammonium phosphate, preferably a sulfite, more preferably sodium sulfite or ammonium sulfite.

By the above procedure, the fluorinated polymer aqueous dispersion comprising particles containing the fluorinated polymer having units based on the specific fluorinated monomer and having D50 of from 20 to 3000 nm, and the polyalkylene oxide compound, will readily be obtained.

The fluorinated polymer aqueous dispersion contains the particles containing the fluorinated polymer in an amount of preferably from 1.0 to 50.0 parts by mass, more preferably from 3 to 40 parts by mass per 100 parts by mass of the aqueous medium.

The fluorinated polymer aqueous dispersion contains the polyalkylene oxide compound in an amount of preferably from 0.1 to 10 mass ppm, more preferably from 1 to 10 mass ppm, to the total mass of the fluorinated polymer aqueous dispersion.

In the fluorinated polymer aqueous dispersion, the content of the polyalkylene oxide compound per 100 parts by mass of the particles containing the fluorinated polymer is preferably from 0.001 to 5.00 parts by mass, more preferably from 0.005 to 3.00 parts by mass.

D50 of the particles containing the fluorinated polymer is preferably from 20 to 1000 nm.

The fluorinated polymer aqueous dispersion contains substantially no emulsifier.

The emulsifier is as defined above.

"The fluorinated polymer aqueous dispersion contains substantially no emulsifier" means that the content of the emulsifier to the total mass of the aqueous medium is at most 0.03 mass ppm, preferably at most 0.02 mass ppm, more preferably 0 mass%.

Further, in a case where TFE units are contained in the fluorinated polymer contained in the fluorinated polymer aqueous dispersion, the content of the TFE units in the fluorinated polymer is less than 99 mass% to all units in the fluorinated polymer.

The fluorinated polymer aqueous dispersion does not require an emulsifier as an essential component, as described above, and accordingly it is readily converted to a dispersion in an organic solvent such as N-methylpyrrolidone or acetone by solvent replacement.

The fluorinated polymer aqueous dispersion containing the particles containing the fluorinated polymer is mixed with an organic solvent, followed by dehydration by evaporation, by means of anhydrous sodium sulfate, or the like to obtain a dispersion in an organic solvent.

In the fluorinated polymer aqueous dispersion, the fluorinated polymer is stably dispersed even without using an emulsifier. Accordingly, the aqueous dispersion can suitably be used for coating applications, a binder, etc.

The polymer composition of the present invention is preferably a composition containing the polyalkylene oxide compound and the fluorinated polymer containing units based on the specific fluorinated monomer.

The polymer composition can readily be obtained from the fluorinated polymer aqueous dispersion. That is, by agglomerating the polymer from the fluorinated polymer aqueous dispersion, a powder of the polymer composition can be obtained. The powdery polymer composition obtained by agglomeration is homogenized e.g. by melt kneading to obtain a forming material in the form of pellets, particles, etc., containing the fluorinated polymer and the polyalkylene oxide compound, or, from the powdery polymer composition obtained by agglomeration, a formed product may be obtained by melt-forming.

The agglomeration method is as defined above.

The fluorinated polymer aqueous dispersion preferably contains substantially no emulsifier.

The emulsifier is as defined above.

In the fluorinated polymer aqueous dispersion, "containing substantially no emulsifier" means that the content of the emulsifier to the total mass of the aqueous medium is 0.03 mass ppm or less, preferably 0.02 mass ppm or less, more preferably 0 mass%.

### EXAMPLES

Now, the present invention will be described in further detail with reference to Examples and Comparative Examples. However, it should be understood that the present invention is by no means restricted thereto. Ex. 1 to 7 are Examples of the present invention.

Measurement methods and evaluation methods are as follows.

D50 (nm) of polymer particles in aqueous dispersion:

Measured by a laser diffraction/scattering particle size distribution measuring apparatus (manufactured by Otsuka Electronics Co., Ltd., ELSZ) using the aqueous dispersion of the polymer particles as a sample.

Confirmation of specific polymer:

The specific polymer being obtained was confirmed by ¹H-NMR analysis.

### Measurement of Q (mm³/s):

The Q value (also called volume flow rate) of ETFE was measured by Flow Tester (manufactured by Shimadzu Corporation), at a temperature of 297°C under a load of 50 kg.

### Proportion of units in polymer:

The proportions of the respective units in the polymer were obtained by ¹⁹F-NMR analysis, fluorine content analysis, and infrared absorption spectrum analysis.

### Melting point (°C):

The melting point is a temperature at an endothermic peak by melting measured by a differential scanning thermal analyzer (manufactured by NETZSCH, DSC 3500Sirius) in a nitrogen atmosphere. The temperature transition program during the measurement is such that -20°C → 310°C → -70°C → 310°C, and the temperature increasing rate is 10°C/min, and the temperature decreasing rate is 5°C/min. The temperature at the endothermic peak by the heat of melting at the second temperature increase after the temperature is decreased to -70°C is taken as the "melting point".

### [Production of fluorinated polymer]

### (Ex. 1)

### [Step 1]

The system in a 2.1 L stainless steel polymerization vessel was replaced with nitrogen, the pressure was reduced to -0.1 MPaG, and ultrapure water (624 g), sodium sulfite (74 mg) and 2-methoxyethyl methacrylate (hereinafter sometimes referred to as "MEM", see the following structural formula) (34 mg) were charged. The solution in the polymerization vessel was heated to 60°C with stirring, and 4.0 ml of a solution having potassium persulfate (hereinafter sometimes referred to as "KPS") dissolved in deionized water (5 mass%) was injected into the polymerization vessel to polymerize MEM. The amount of polyMEM in 100 parts by mass of the aqueous medium is 0.0054 parts by mass as calculated from the amount of MEM charged.

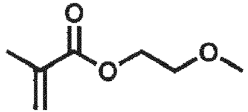

### [Step 2]

Then, the pressure in the polymerization vessel was elevated to 1.9 MPaG with a monomer mixture TFE/E=86/14 (molar ratio), and 10 ml of a solution having KPS (5 mass%) and sodium acetate (1.2 mass%) dissolved in deionized water and PFBE (0.7 g) were injected into the polymerization vessel. Upon start of pressure drop in the polymerization vessel, a monomer mixture TFE/E=54/46 (molar ratio) was added so as to keep the internal pressure of the polymerization vessel to 1.9 MPaG to make polymerization proceed. At a point when the amount of the monomer mixture continuously charged reached 30 g, the polymerization vessel was cooled to room temperature, and the gas in the polymerization vessel was discharged to the air. The polymerization time was 329 minutes.

The solid content concentration of the fluorinated polymer in the obtained fluorinated polymer aqueous dispersion was about 3.7%. Further, D50 of fluorinated polymer particles in the fluorinated polymer aqueous dispersion was 92 nm.

The fluorinated polymer aqueous dispersion was cooled and the fluorinated polymer particles were agglomerated to collect a powder. The fluorinated polymer powder was dried at 150°C. The Q value of the obtained fluorinated polymer powder under a load of 50 kg was 8.3 mm³/s, the molar ratio of the TFE units/E units/PFBE units in the fluorinated polymer was 53.0/46.0/1.0. The melting point of the obtained fluorinated polymer was 266°C.

### (Ex. 2 to 7)

Fluorinated polymers were produced in the same manner as in Example 1 except that compounds as identified in Table 1 were used in predetermined amounts instead of MEM. The results are shown in Table 1.

The symbols representing the compounds in Table 1 are respectively as follows.

### "DiGMEMA": diethylene glycol monomethyl ether methacrylate (see the following structural formula)

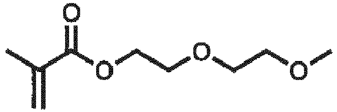

### "TeEDGDMA": tetraethylene glycol dimethacrylate (see the following structural formula)

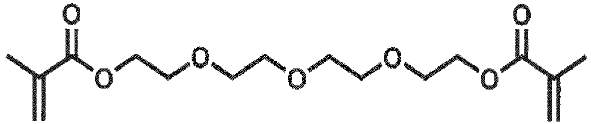

### "PMEM": methoxypolyethylene glycol methacrylate (see the following structural formula, Mw: 500, n=11)

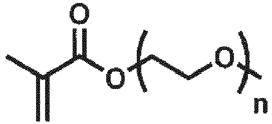

### "EGMMMA": ethylene glycol monoacetoacetate monomethacrylate (see the following structural formula)

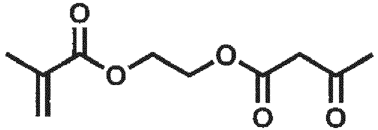

### "PEG1000": polyethylene glycol (see the following structural formula, Mw:1000, n=23)

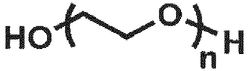

### "MPA": 2-methyl-2-propenyl acetate (see the following structural formula)

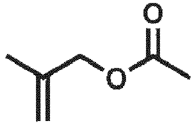

In Table 1, the row "Parts by mass" in the row "Compound" represents the amount of the specific polymer present per 100 parts by mass of the aqueous medium in Ex. 1 to 5 and 7, and represents the amount of the polyalkylene oxide present per 100 parts by mass of the aqueous medium in Ex. 6.

In Table 1, the row "Amount of initiator used when specific compound is polymerized" represents the amount (g) of the water-soluble polymerization initiator used when the specific polymer was polymerized in Ex. 1 to 5 and 7.

In Table 1, the row "Solid content (%)" represents the solid content concentration of the fluorinated polymer in the fluorinated polymer aqueous dispersion.

In Table 1, the row "D50 (nm)" represents D50 (nm) of the fluorinated polymer particles.

In Table 1, the row "Q value (mm³/g)" represents the Q value (mm³/g) of the fluorinated polymer powder under a load of 50 kg.

In Table 1, the row "Melting point (°C)" represents the melting point (°C) of the fluorinated polymer.

In Table 1, "TFE units (mol%)", "E units (mol%)" and "PFBE units (mol%)" respectively mean the contents of TFE units, E units and PFBE units in the obtained fluorinated polymer.

In Ex. 1 to 7, substantially no emulsifier was present when the fluorinated monomer was polymerized.

**[Table 1]**

| | | Ex. 1 | Ex. 2 | Ex. 3 | Ex. 4 | Ex. 5 | Ex. 6 | Ex. 7 |
|---|---|---|---|---|---|---|---|---|
| Compound | Type | MEM | DiGMEMA | TeEDGDMA | PMEM | EGMMMA | PEG1000 | MPA |
| | Amount used (mg) | 34 | 33 | 31 | 10 | 5 | 2 | 10 |
| | Parts by mass | 0.0054 | 0.0053 | 0.0050 | 0.0016 | 0.0008 | 0.0003 | 0.0016 |
| Amount of initiator used when specific compound is polymerized (g) | | 0.2 | 0.2 | 0.2 | 0.2 | 0.2 | - | 0.2 |
| Solid content (%) | | 3.7 | 3.2 | 3.5 | 3.2 | 2.9 | 4.1 | 3.5 |
| D50 (nm) | | 92 | 92 | 106 | 98 | 130 | 144 | 194 |
| Q value (mm³/s) | | 8.3 | 15.6 | 4.4 | 16.2 | 25.5 | 1.0 | 0.9 |
| Melting point (°C) | | 266 | 269 | 267 | 267 | 266 | 267 | 271 |
| TFE units (mol%) | | 53.0 | 52.8 | 53.2 | 52.6 | 54.3 | 53.1 | 52.9 |
| E units (mol%) | | 46.0 | 46.4 | 45.8 | 46.0 | 44.4 | 46.2 | 46.0 |
| PFBE units (mol%) | | 1.0 | 0.8 | 1.0 | 1.4 | 1.3 | 0.7 | 1.1 |

As shown in Ex. 1 to 7, it was confirmed that according to the production method of the present invention, desired effects are obtained.

The entire disclosure of Japanese Patent Application No. 2020-165490 filed on September 30, 2020 including specification, claims and summary is incorporated herein by reference in its entirety.

## Claims

1. A method for producing a fluorinated polymer, which comprises polymerizing at least one fluorinated monomer selected from tetrafluoroethylene, chlorotrifluoroethylene and vinylidene fluoride, in an aqueous medium in the presence of a specific polymer having at least one type of units selected from units based on a compound represented by the formula (1) and units based on a compound represented by the formula (2) to produce a fluorinated polymer (provided that when tetrafluoroethylene is polymerized, tetrafluoroethylene is copolymerized so that the content of units based on tetrafluoroethylene in the fluorinated polymer is less than 99 mass% to all units in the fluorinated polymer):
formula (1): CXY=CR¹ -COO-(L-O)ₙ -R²
formula (2): CXY=CR³-(O)ₘ-CH₂-Z-R⁴
the symbols in the formula (1) and the formula (2) are as follows:
X and Y are each independently a hydrogen atom, a halogen atom or a methyl group;
R¹ is a hydrogen atom, a halogen atom or a C₁₋₃ alkyl group;
R² is an alkyl group, an alkyl group having at least one -CH₂- in the alkyl group replaced with -CO-, or a group of the following formula (3);
R³ is a hydrogen atom, a halogen atom, a C₁₋₃ alkyl group or -CO-OCH₃;
R⁴ is an alkyl group;
L is an alkylene group;
Z is -CO-O-* or -O-CO-*, provided that * represents the binding position to R⁴;
m is 0 or 1, and n is an integer of at least 1;
formula (3): -CO-CR' =CXY
in the formula (3), X, Y and R¹ are respectively as defined for X, Y and R¹ in the formula (1).

2. The production method according to Claim 1, wherein the amount of the specific polymer present is from 0.0001 to 1.0 parts by mass per 100 parts by mass of the aqueous medium.

3. A method for producing a fluorinated polymer, which comprises polymerizing at least one specific compound selected from a compound represented by the formula (1) and a compound represented by the formula (2) in an aqueous medium to obtain an aqueous medium in which a specific polymer is present, and then in the aqueous medium in which the specific polymer is present, polymerizing at least one fluorinated monomer selected from tetrafluoroethylene, chlorotrifluoroethylene and vinylidene fluoride to produce a fluorinated polymer (provided that when tetrafluoroethylene is polymerized, tetrafluoroethylene is copolymerized so that the content of units based on tetrafluoroethylene in the fluorinated polymer is less than 99 mass% to all units in the fluorinated polymer):
formula (1): CXY=CR¹ -COO-(L-O)ₙ -R²
formula (2): CXY=CR³-(O)ₘ-CH₂-Z-R⁴
the symbols in the formula (1) and the formula (2) are as follows:
X and Y are each independently a hydrogen atom, a halogen atom or a methyl group;
R¹ is a hydrogen atom, a halogen atom or a C₁₋₃ alkyl group;
R² is an alkyl group, an alkyl group having at least one -CH₂- in the alkyl group replaced with -CO-, or a group of the following formula (3);
R³ is a hydrogen atom, a halogen atom, a C₁₋₃ alkyl group or -CO-OCH₃ ;
R⁴ is an alkyl group;
L is an alkylene group;
Z is -CO-O-* or -O-CO-*, provided that * represents the binding position to R⁴;
m is 0 or 1, and n is an integer of at least 1;
formula (3): -CO-CR' =CXY
in the formula (3), X, Y and R¹ are respectively as defined for X, Y and R¹ in the formula (1).

4. The production method according to Claim 3, wherein the aqueous medium in which the specific polymer is present, is an aqueous medium which is used for producing the specific polymer and in which the specific polymer is thus present.

5. The production method according to Claim 3 or 4, wherein the amount of the specific polymer present at the time of polymerizing the fluorinated monomer is from 0.0001 to 1.0 parts by mass per 100 parts by mass of the aqueous medium.

6. A method for producing a fluorinated polymer, which comprises polymerizing at least one fluorinated monomer selected from tetrafluoroethylene, chlorotrifluoroethylene and vinylidene fluoride in an aqueous medium, in the presence of a polyoxyalkylene oxide compound and substantially in the absence of an emulsifier to produce a fluorinated polymer (provided that when tetrafluoroethylene is polymerized, tetrafluoroethylene is copolymerized so that the content of units based on tetrafluoroethylene in the fluorinated polymer is less than 99 mass% to all units in the fluorinated polymer).

7. A fluorinated polymer aqueous dispersion, which comprises an aqueous medium, particles of a fluorinated polymer having units based on at least one fluorinated monomer selected from tetrafluoroethylene, chlorotrifluoroethylene and vinylidene fluoride (provided that when tetrafluoroethylene is polymerized, tetrafluoroethylene is copolymerized so that the content of units based on tetrafluoroethylene in the fluorinated polymer is less than 99 mass% to all units in the fluorinated polymer) and having a volume based cumulative 50% particle size of from 20 to 3000 nm, and a specific polymer having at least one type of units selected from units based on a compound represented by the formula (1) and units based on a compound represented by the formula (2), contained as particles in the aqueous medium or contained in particles containing the fluorinated polymer, and contains substantially no emulsifier:
formula (1): CXY=CR¹ -COO-(L-O)ₙ -R²
formula (2): CXY=CR³ -(O)ₘ -CH₂ -Z-R⁴
the symbols in the formula (1) and the formula (2) are as follows:
X and Y are each independently a hydrogen atom, a halogen atom or a methyl group;
R¹ is a hydrogen atom, a halogen atom or a C₁₋₃ alkyl group;
R² is an alkyl group, an alkyl group having at least one -CH₂- in the alkyl group replaced with -CO-, or a group of the following formula (3);
R³ is a hydrogen atom, a halogen atom, a C₁₋₃ alkyl group or -CO-OCH₃;
R⁴ is an alkyl group;
L is an alkylene group;
Z is -CO-O-* or -O-CO-*, provided that * represents the binding position to R⁴;
m is 0 or 1, and n is an integer of at least 1;
formula (3): -CO-CR¹ =CXY
in the formula (3), X, Y and R¹ are respectively as defined for X, Y and R¹ in the formula (1).

8. The fluorinated polymer aqueous dispersion according to Claim 7, which contains the particles containing the fluorinated polymer in an amount of from 1.0 to 50.0 parts by mass per 100 parts by mass of the aqueous medium.

9. The fluorinated polymer aqueous dispersion according to Claim 7 or 8, which contains the particles of the specific polymer in an amount of from 0.0001 to 1.0 parts by mass per 100 parts by mass of the aqueous medium.

10. The fluorinated polymer aqueous dispersion according to any one of Claims 7 to 9, which contains the particles of the specific polymer in an amount of from 0.001 to 5.00 parts by mass per 100 parts by mass of the particles containing the fluorinated polymer.

11. A fluorinated polymer aqueous dispersion, which comprises an aqueous medium, particles of a fluorinated polymer having units based on at least one fluorinated monomer selected from tetrafluoroethylene, chlorotrifluoroethylene and vinylidene fluoride (provided that when tetrafluoroethylene is polymerized, tetrafluoroethylene is copolymerized so that the content of units based on tetrafluoroethylene in the fluorinated polymer is less than 99 mass% to all units in the fluorinated polymer) and having a volume based cumulative 50% particle size of from 20 to 3000 nm, and a polyalkylene oxide compound, and contains substantially no emulsifier.

12. A polymer composition comprising a fluorinated polymer having units based on at least one fluorinated monomer selected from tetrafluoroethylene, chlorotrifluoroethylene and vinylidene fluoride (provided that when tetrafluoroethylene is polymerized, the content of units based on tetrafluoroethylene in the fluorinated polymer is less than 99 mass% to all units in the fluorinated polymer), and a specific polymer having at least one type of units selected from units based on a compound represented by the formula (1) and units based on a compound represented by the formula (2), and contains substantially no emulsifier:
formula (1): CXY=CR¹ -COO-(L-O)ₙ -R²
formula (2): CXY=CR³-(O)ₘ-CH₂-Z-R⁴
the symbols in the formula (1) and the formula (2) are as follows:
X and Y are each independently a hydrogen atom, a halogen atom or a methyl group;
R¹ is a hydrogen atom, a halogen atom or a C₁₋₃ alkyl group;
R² is an alkyl group, an alkyl group having at least one -CH₂- in the alkyl group replaced with -CO-, or a group of the following formula (3);
R³ is a hydrogen atom, a halogen atom, a C₁₋₃ alkyl group or -CO-OCH₃;
R⁴ is an alkyl group;
L is an alkylene group;
Z is -CO-O-* or -O-CO-*, provided that * represents the binding position to R⁴;
m is 0 or 1, and n is an integer of at least 1;
formula (3): -CO-CR' =CXY
in the formula (3), X, Y and R¹ are respectively as defined for X, Y and R¹ in the formula (1).

13. The polymer composition according to Claim 12, wherein the content of the specific polymer is from 0.001 to 5.00 parts by mass per 100 parts by mass of the fluorinated polymer.

14. A polymer composition comprising a fluorinated polymer having units based on at least one fluorinated monomer selected from tetrafluoroethylene, chlorotrifluoroethylene and vinylidene fluoride (provided that when tetrafluoroethylene is polymerized, the content of units based on tetrafluoroethylene in the fluorinated polymer is less than 99 mass% to all units in the fluorinated polymer), and a polyoxyalkylene oxide compound, and containing substantially no emulsifier.
